# EUROPÄISCHE PATENTSCHRIFT

(11) **EP 1 360 344 B1**
(45) Veröffentlichungstag und Bekanntmachung des Hinweises auf die Patenterteilung: **17.01.2007**
(21) Anmeldenummer: 02716690.9
(22) Anmeldetag: 26.01.2002
(51) Int. Cl.: C25B 1/00

(54) **ELEKTROCHEMISCHE HERSTELLUNG VON NANOSKALIGEN METALL(MISCH)OXIDEN**
ELECTROCHEMICAL PRODUCTION OF NANOSCALE METAL (MIXED) OXIDES
PRODUCTION ELECTROCHIMIQUE D'OXYDES (MIXTES) METALLIQUES NANOMETRIQUES

(30) Priorität: 30.01.2001 DE 10104302
(43) Veröffentlichungstag der Anmeldung: 12.11.2003
(73) Patentinhaber: Henkel Kommanditgesellschaft auf Aktien, 40589 Düsseldorf (DE)
(72) Erfinder: NATTER, Harald, 66117 Saarbrücken (DE); DIERSTEIN, Andrea, 66540 Neunkirchen (DE); HEMPELMANN, Rolf, 66386 St. Ingbert (DE); STEPHAN, Hans-Oscar, 47269 Duisburg (DE); KROPF, Christian, 40721 Hilden (DE)
(86) Internationale Anmeldenummer: PCT/EP2002/000826
(87) Internationale Veröffentlichungsnummer: WO 2002/061183

(56) Entgegenhaltungen:
- DE-A- 19 840 842
- US-A- 4 067 788
- US-A- 5 116 468
- US-A- 5 286 354
- DATABASE COMPENDEX [Online] ENGINEERING INFORMATION, INC., NEW YORK, NY, US; ZOTTI GIANNI ET AL: "Anodic dissolution of titanium in acetonitrile to Ti(IV) perchlorate and subsequent reductive electrodeposition of amorphous TiO2 films" Database accession no. EIX99224611552 XP002206852 & J ELECTROCHEM SOC;JOURNAL OF THE ELECTROCHEMICAL SOCIETY FEB 1999 ELECTROCHEMICAL SOC INC, PENNINGTON, NJ, USA, Bd. 146, Nr. 2, Februar 1999 (1999-02), Seiten 637-641,

## Beschreibung

Die vorliegende Erfindung betrifft ein Verfahren zur Herstellung amorpher und/oder kristalliner Oxide und Mischoxide von Metallen, insbesondere Metallen der dritten bis fünften Hauptgruppe oder der Nebengruppen, wobei die auf diese Weise hergestellten (Misch-)Oxide mittlere Teilchendurchmesser im Nanometerbereich aufweisen. Unter dem Begriff "Nanometerbereich" wird im Sinne der vorliegenden Erfindung insbesondere der Bereich von etwa 1 nm bis etwa 500 nm, vorzugsweise der Bereich von etwa 1 nm bis etwa 100 nm, verstanden.

Derartige Metalloxide können unterschiedliche technische Verwendung finden, z. B. als Dielektrika für miniaturisierte Vielschichtkondensatoren, als Katalysatoren, als Zusätze in Farben und in Kosmetika, als Zusätze zu Kunststoffen, um diese gegen thermische oder photochemische Zersetzung zu stabilisieren und/oder ihre dielektrischen und/oder magnetischen Eigenschaften zu verändern, und als Poliermittel.

Metalloxide mit Teilchendurchmessern im Nanometerbereich können beispielsweise dadurch erhalten werden, daß man Alkoxide der Metalle in einem nicht mit Wasser mischbaren Lösungsmittel löst, unter Verwendung geeigneter Tenside eine Emulsion dieser Lösung in Wasser herstellt, bei der die emulgierten Tröpfchen des Lösungsmittels Durchmesser im Nanometerbereich haben, und die Metallalkoxide zu den Mischoxiden hydrolysiert. Die Nachteile dieses Verfahrens liegen insbesondere darin, daß die Metallalkoxide teure Ausgangsstoffe darstellen, daß zusätzlich Emulgatoren verwendet werden müssen und daß die Herstellung der Emulsion mit Tröpfchengrößen im Nanometerbereich einen aufwendigen Verfahrensschritt darstellt.

Weiterhin ist es bekannt, Metallpartikel, d. h. nicht Metalloxidpartikel, mit einer Teilchengröße unter 30 nm dadurch herzustellen, daß man geeignete Metallsalze in Gegenwart eines Stabilisators und gegebenenfalls unter Zusatz eines Leitsalzes in organischen Lösungsmitteln oder in deren Gemischen mit Wasser kathodisch reduziert. Anstelle des Auflösens von Metallsalzen in dem Elektrolyten kann man die kathodisch zu reduzierenden Metallionen auch dadurch in Lösung bringen, daß man Anoden aus den entsprechenden Metallen verwendet, die sich während der Elektrolyse auflösen. Ein solches Verfahren ist beschrieben in der DE-A-44 43 392 und der entsprechenden EP-A-0 672 765.

Aus der DE-A-44 08 512 bzw. der entsprechenden EP-A-0 672 765 ist weiterhin ein Verfahren zur elektrolytischen Herstellung von Metallkolloiden bekannt, bei dem man ein oder mehrere Metalle anodisch in Gegenwart eines Leitsalzes in aprotischen organischen Lösungsmitteln löst und kathodisch in Gegenwart von Stabilisatoren zu kolloidalen Metallösungen oder redispergierbaren Metallkolloidpulvern mit einer Teilchengröße unter 30 nm reduziert. Dabei können das Leitsalz und der Stabilisator identisch sein. Führt man die kathodische Reduktion in Gegenwart geeigneter Träger durch, so schlagen sich die Metallkolloide auf diesen Trägem nieder.

Weiterhin ist es aus Chemical Abstracts, Referat 110: 65662 bekannt, feinteiliges Zirkonoxidpulver dadurch herzustellen, daß man in einer Lösung von Zirkonylnitrat auf elektrochemischem Wege eine Base erzeugt, durch die das Zirkonylnitrat unter Abscheidung von hydratisiertem Zirkonoxid hydrolysiert wird. Durch Calcinierung kann aus dem hydratisierten Zirkonoxid kristallines Zirkonoxid erhalten werden.

Gemäß Chemical Abstracts, Referat 114: 31811 lassen sich Mischoxide von Eisen, Nickel und Zink dadurch herstellen, daß man aus Metallsalzlösungen ein Hydroxidgemisch dieser Metalle elektrochemisch ausfällt und die isolierten Hydroxide zu den Mischoxiden calciniert.

*C. Pascal et al*., "Electrochemical Synthesis for the Control of γ-Fe₂O₃ Nanoparticle Size. Morphology, Microstructure, and Magnetic Behavior" in *Chem. Mater.* **1999**, *11*, Seiten 141-147 beschreiben die elektrochemische Synthese von Nanopartikeln des Maghemits (γ-Fe₂O₃) in organischen Medien durch Kontrolle der Stromdichte und unter Verwendung kationischer Tenside zur Stabilisierung der kolloidalen Suspension der erhaltenen Teilchen.

*R. M. Nyffenegger et al.,* "A Hybrid Electrochemical/Chemical Synthesis of Zinc Oxide Nanoparticles and Optically Intrinsic Thin Films" in *Chem. Mater.* **1998**, *10,* Seiten 1120-1129 beschreiben eine chemisch-elektrochemische Hybridroute zur Herstellung Zinkoxidnanopartikeln und -filmen, wobei zunächst metallisches Zink elektrochemisch auf einer Graphitelektrode abgeschieden wird und dann das abgeschiedene metallische Zink oxidiert und dehydratisiert wird.

*E. P. Reddy et al.,* "Preparation and Characterization of Cobalt Oxide Nanosized Particles Obtained by an Electrochemical Method" in *NanoStructured Materials,* Band 12, Seiten 61-64, 1999 beschreiben ein zweistufiges Verfahren zur elektrochemisch-chemischen Herstellung von Cobaltoxidteilchen, wobei zunächst Cobaltkationen in Gegenwart von Tetraalkylammoniumsalzen als stabile Cobaltmetallcluster abgeschieden werden, welche anschließend unter Einwirkung von Sauerstoff zu nanoskaligen Cobaltoxidteilchen oxidiert werden, die mit einem Ammoniumsalz stabilisiert sind.

*S. Mahamuni et al.,* "Spectroscopic and structural characterization of electrochemically grown ZnO quantum dots" in *J. Appl. Phys.,* Band 85, Nr. 5, Seiten 2861-2864 beschreiben ein Verfahren zur Synthese von stabilem, hydroxidfreiem Zinkoxid auf elektrochemischem Weg unter Verwendung einer Zinkopferelektrode, die bei der Elektrolyse in Acetonitril und Tetrahydrofuran in Gegenwart von Tetraoctylammoniumbromid und unter Sauerstoffatmosphäre zu ZnO-Teilchen umgesetzt wird.

In der DE 198 408 42 A1 wird die elektrochemische Herstellung von amorphen und kristallinen nanoskaligen Metalloxiden und Metallmischoxiden beschrieben. Bei diesem Prozeß werden insbesondere aus einer Metall- oder Legierungsanode durch elektrochemische Oxidation in einem organischen Lösungsmittel Metallionen in situ erzeugt und die auf diese Weise erzeugten Metallionen werden reduktiv an der Kathode als Metallcluster abgeschieden und durch oxidierenden Bedingungen (z.B. Luftspülung) in situ in das Metalloxid überführt. In der Lösung anwesende Additive und Leitsalze, vorzugsweise quartäre Ammoniumsalze, stabilisieren die Nanostruktur. Das Verfahren gemäß DE 198 408 42 A1 ist jedoch mit einer Reihe von Problemen verbunden: Der Preis von bestimmten Metallblechen als Opferelektrodenmaterial (z.B. Mg, Zr, In, V) ist sehr hoch und somit unwirtschaftlich. Bestimmte Metalle sind außerdem nur sehr aufwendig als Bleche herstellbar (z.B. Mn, Cr). Zur Abscheidung von Mischoxiden ist die Herstellung von Legierungen oder die Verwendung mehrerer Anoden erforderlich, was mit hohen Kosten und hohem Zeitbedarf verbunden ist. Bei der Verwendung von Halogeniden tritt bei dem Verfahren gemäß DE 198 408 42 A1 außerdem das Problem der anodischen Halogenabscheidung auf. Durch das chemisch aggressive Halogen werden die entstandenen Metallcluster direkt nach ihrer Bildung wieder aufgelöst, und es kann kein Produkt isoliert werden. Daher ist der Einsatz von halogenhaltigen Verbindungen bei diesem Verfahren nur begrenzt möglich. Metallsalzhalogenide und die Halogenverbindungen der Stabilisatoren (z. B. Dehyquart^{®} A) besitzen aber einen sehr niedrigen Preis und zeigen oft eine außergewöhnlich gute Löslichkeit in organischen Medien.

Die Erfindung stellt sich die Aufgabe, ein Verfahren zur Herstellung amorpher und/oder kristalliner Metalloxide oder -mischoxide mit mittleren Teilchendurchmessern im Nanometerbereich zur Verfügung zu stellen. Insbesondere soll ein solches Verfahren die Nachteile des Standes der Technik vermeiden. Dabei soll auch der Einsatz von Metallhalogeniden und halogenhaltigen Leitsalzen möglich sein, ohne daß dies die Metalloxidbildung beeinträchtigt. Des weiteren sollen die erzeugten Metall(misch)oxide insbesondere nicht durch Einlagerung von anionischen Bestandteilen, die aus den Metall- und/oder Leitsalzen stammen, verunreinigt werden können.

Eine weitere Aufgabe der vorliegenden Erfindung liegt insbesondere darin, das in der DE 198 408 42 A1 beschriebene Verfahren derart weiterzuentwickeln, daß die zuvor geschilderten Nachteile und Probleme vermieden werden.

Die Anmelderin hat nun überraschenderweise herausgefunden, daß die zuvor beschriebene Aufgabe durch die Verwendung von Elektrolysezellen mit getrennten Elektrodenräumen gelöst werden kann.

Die Erfindung betrifft demnach ein Verfahren zur Herstellung amorpher und/oder kristalliner (Misch-)Oxide von Metallen der dritten bis fünften Hauptgruppe oder der Nebengruppen des Periodensystems, mit mittleren Teilchendurchmessern der (Misch-)Oxide im Bereich von 1 bis 500 nm, insbesondere 1 bis 100 nm, bei dem man in einer mit einer Kathode und einer Anode ausgestatteten Elektrolysevorrichtung in einem organischen Elektrolyten gelöste Ionen desjenigen oder derjenigen Metalle, deren (Misch)Oxid hergestellt werden soll, in Gegenwart eines Oxidationsmittels an der Kathode elektrochemisch reduziert, wobei Kathodenraum (Kathodenhalbzelle) und Anodenraum (Anodenhalbzelle) durch eine poröse Trenn- oder Scheidewand (Diaphragma) voneinander getrennt sind, die den Stromdurchgang ermöglicht, also insbesondere durchlässig für Kationen und Anionen ist, jedoch den Durchtritt von elementarem Halogen vom Anoden- zum Kathodenraum erschwert, insbesondere verhindert.

Beispielsweise kann als Trenn- oder Scheidewand eine poröse Glasfritte, insbesondere mit einem Porendurchmesser von etwa 1 bis 4 µm, verwendet werden. Des weiteren kann als Trenn- oder Scheidewand ein Polytetrafluorethylenfilter oder eine Polytetrafluorethylenmembran, insbesondere mit einem Porendurchmesser von etwa 1 bis 4 µm, verwendet werden. Darüber hinaus kann als Trenn- oder Scheidewand eine poröse Polythylen-Folie oder Polyethylen-Scheibe (z. B. Vyon^{®}, ein Material aus Niederdruckpolyethylen), insbesondere mit einem Porendurchmesser von etwa 1 bis 4 µm, verwendet werden. Gleichermaßen kann als Trenn- oder Scheidewand eine protonenleitende Membran, insbesondere eine perfluorierte lonenaustauschermembran (z. B. Nafion^{®} von DuPont oder Aldrich), vorzugsweise mit einem Porendurchmesser von etwa 1 bis 4 µm, zum Einsatz kommen. Bei der Nafion^{®}-Membran handelt es um eine Membran mit teflonähnlichen Aufbau. Der Vorteil beispielsweise von Nafion^{®}-Membranen liegt in der großen chemischen Beständigkeit, der guten lonenleitfähigkeit und dem guten Halogenrückhaltevermögen. Weiterhin können diese Folien mit einer Dicke von 128 µm sehr gut verarbeitet werden und ermöglichen dadurch eine unkomplizierte Fertigung der Elektrolysenzellen.

Durch die Trennung der Elektrodenräume mittels erfindungsgemäß verwendetem Diaphragma wird die elektrische Leitfähigkeit aufrechterhalten, aber es kann kein Halogenid in den Kathodenraum gelangen.

Bei dem erfindungsgemäßen Verfahren ist der mittlere Teilchendurchmesser der (Misch-)Oxide durch Variation der Temperatur des Elektrolyten, der elektrischen Spannung bzw. Stromstärke sowie durch die Art des gegebenenfalls verwendeten Leitsalzes einstellbar. Vorzugsweise führt man das erfindungsgemäße Verfahren derart durch, daß die erhaltenen Metalloxide mittlere Teilchendurchmesser im Bereich von etwa 1 bis etwa 500 nm, bevorzugt von etwa 1 bis etwa 100 nm, haben.

Nach dem erfindungsgemäßen Verfahren lassen sich insbesondere solche Metalloxide herstellen, die bei einer Temperatur unterhalb von etwa 100 °C nicht mit Feuchtigkeit zu Hydroxiden reagieren. Demnach eignet sich das erfindungsgemäße Verfahren nicht zur Herstellung von Oxiden und Mischoxiden von Alkali- oder Erdalkalimetallen. Es ist weiter insbesondere geeignet zur Herstellung von Oxiden solcher Metalle, die bei Temperaturen unterhalb von etwa 100 °C durch Luftsauerstoff oxidiert werden. Bei Verwendung derartiger Metalle kann das erfindungsgemäße Verfahren bei Temperaturen unterhalb von 100 °C unter Verwendung von Luft als Oxidationsmittel durchgeführt werden. Dies erlaubt eine technisch wenig aufwendige Verfahrensführung. Das erfindungsgemäße Verfahren eignet sich besonders zur Herstellung amorpher und/oder kristalliner Oxide und Mischoxide von Ti, Zr, Cr, Mo, Fe, Co, Ni, Pb, In, Sn und/oder Al.

Als organischen Elektrolyt wählt man vorzugsweise eine Substanz, die im Temperaturbereich zwischen etwa -78 °C und etwa +260 °C bei Normaldruck flüssig ist. Insbesondere wählt man vorzugsweise eine Substanz, die im Temperaturbereich zwischen etwa 0 °C und etwa 60 °C bei Normaldruck flüssig ist. Vorzugsweise verwendet man als organischen Elektrolyten Alkohole (z. B. isoPropanol oder n-Propanol) oder Polyalkohohle (z. B. Glycerin oder Polyglykole) oder deren Mischungen und Derivate, Ketone, Ether (z. B. Tetrahydrofuran oder Diethylether), Nitrile, organische Carbonate (z. B. Propylencarbonat oder Diethylcarbonat) und aromatische Verbindungen, wobei solche bevorzugt sind, die in den genannten Temperaturbereichen flüssig sind. Als Elektrolyt eignen sich weiterhin Tetrahydrofuran, Aceton, Acetonitril, Toluol und deren Mischungen mit Alkoholen.

Je nach herzustellendem Metall(misch)oxid kann es günstig sein, wenn der Elektrolyt geringe Mengen an Wasser enthält. Beispielsweise kann der Wassergehalt des organischen Elektrolyten im Bereich von etwa 0,01 bis etwa 2 Gew.-% und insbesondere im Bereich von etwa 0,05 bis etwa 1 Gew.-% liegen, wobei sich die Prozentangaben auf die Gesamtmenge des organischen Elektrolyten und des Wassers beziehen.

Sollte der Elektrolyt nicht von sich aus eine ausreichende elektrische Leitfähigkeit aufweisen oder dadurch erhalten, daß man in ihm Salze derjenigen Metalle auflöst, deren (Misch-)Oxide man herstellen will, ist es empfehlenswert, in dem Elektrolyten ein Leitsalz aufzulösen. Hierbei können die gängigen Leitsalze verwendet werden, die man üblicherweise einsetzt, um den genannten Elektrolyten eine für elektrochemische Prozesse ausreichende elektrische Leitfähigkeit zu verleihen. Als solche Leitsalze eignen sich beispielsweise im Elektrolyten lösliche Hexafluorophosphate, Sulfonate, Acetylacetonate, Carboxylate und insbesondere quaternäre Phosphonium- und/oder Ammoniumsalze mit organischen Resten am Phosphor bzw. am Stickstoff. Vorzugsweise setzt man quaternäre Ammoniumverbindungen ein, die Aryl- und/oder Alkylgruppen am Stickstoff tragen und vorzugsweise als Halogenide vorliegen. Ein Beispiel für ein besonders geeignetes Leitsalz ist Tetrabutylammoniumbromid. Bei Bedarf können diese Leitsalze zusammen mit oberflächenaktiven Substanzen, die die erzeugten Metalloxidpartikel stabilisieren, eingesetzt werden. Die oberflächenaktiven Substanzen sind insbesondere ausgewählt aus der gesamten Substanzklasse der Tenside. Bevorzugt werden die folgenden Verbindungen eingesetzt: Fettalkohole, Fettalkoholethoxylate, Polyoxyethylencarbonsäuren und/oder Fettsäureethoxylate.

Dabei arbeitet man vorzugsweise in einem Temperaturbereich, in dem das Leitsalz in dem organischen Elektrolyten in ausreichendem Maße löslich ist. Vorzugsweise führt man das erfindungsgemäße Verfahren so durch, daß der organische Elektrolyt eine Temperatur im Bereich von etwa 30 °C bis etwa 50 °C aufweist. Verwendet man Tetrahydrofuran als Elektrolyt und Tetrabutylammoniumbromid als Leitsalz, kann man vorzugsweise bei Temperaturen oberhalb von 35 °C, beispielsweise im Bereich zwischen 35 °C und 40 °C, arbeiten.

Die Leitsalze haben den zusätzlichen Effekt, daß sie die entstehenden Oxidpartikel vor Agglomeration schützen. Hierdurch kann eine sehr enge Teilchengrößenverteilung erreicht werden. Legt man keinen Wert auf eine enge Teilchengrößenverteilung, kann man auf den Zusatz von Leitsalzen verzichten, sofern der Elektrolyt aufgrund der gelösten Salze des als Oxid abzuscheidenden Metalls eine ausreichende elektrische Leitfähigkeit aufweist.

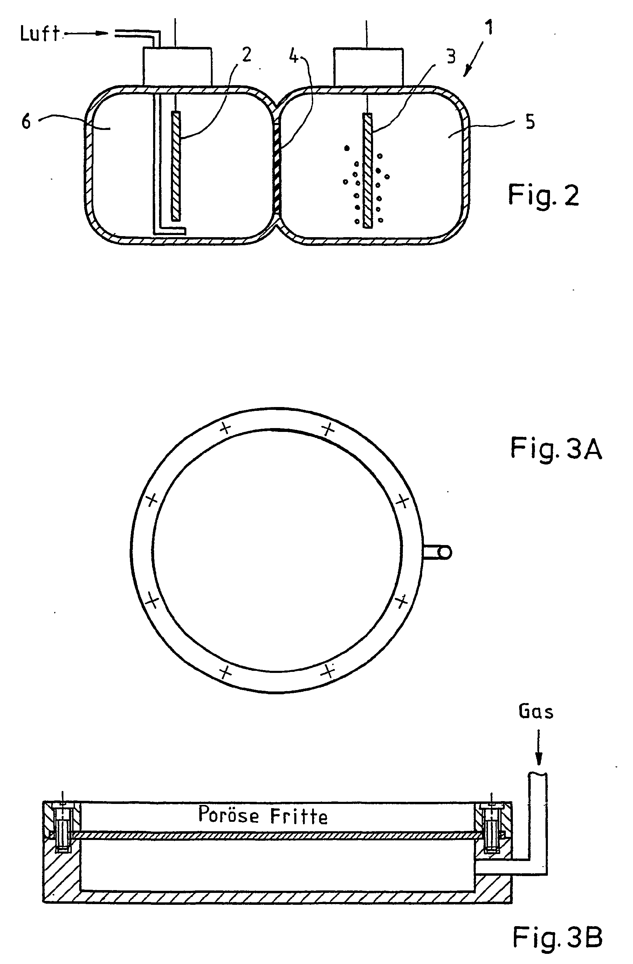

Erfindungsgemäß entstehen die Metall(misch)oxide dadurch, daß man die Ionen der Metalle in Gegenwart eines Oxidationsmittels an einer Kathode elektrochemisch reduziert. Das am einfachsten einzusetzende Oxidationsmittel, dessen Verwendung demnach bevorzugt ist, ist der Sauerstoff der Luft. Demnach führt man das erfindungsgemäße Verfahren vorzugsweise so durch, daß man während der elektrochemischen Reduktion der Metallionen Luft in den Elektrolyten einleitet. Die Oxidation der in der ersten Stufe abgeschiedenen Metallpartikel wird also bevorzugt durch Luftsauerstoff bewirkt. Die Luft wird hierzu in Form kleiner Bläschen eingeleitet, die zum einen für eine feine Verteilung des Oxidationsmittels Sauerstoff im Kathodenraum sorgen und zum anderen durch die ständige Vermischung des Elektrolyten sicherstellen, daß sich keine feste Metalloxidschicht auf der Kathode bildet, sondern dafür sorgt, daß die gebildeten Metalloxidpartikel von der Kathode abgespült werden und im Elektrolyten dispergiert werden. Eine Vorrichtung zum feinteiligen Einleiten von Luft ist in Fig. 3 abgebildet. In dieser Vorrichtung wird Druckluft durch ein flaches Frittenmaterial gepreßt. Hierzu können z. B. Vyon^{®} (Poren 5 bis 40 µm), poröses Teflon^{®} oder auch Keramikfritten verwendet werden. Die Dicke der Fritten beträgt 2 bis 5 mm. Die Fritte kann mit einem Ring auf eine Wandlung aufgeschraubt sein (siehe insbesondere Fig. 3). Die Dichtung zwischen Wanne und Fritte kann durch das Frittenmaterial selbst bewirkt werden. Im Falle von Keramikfritten empfiehlt es sich, beispielsweise mit einer Gummidichtung zu arbeiten. Als Material für den Körper dieser Vorrichtung eignen sich beispielsweise lösungsmittelbeständige Kunststoffe wie PEK, PVC und Teflon^{®}. Es ist auch denkbar, daß die Apparatur aus Metall gefertigt werden kann. Zur Unterstützung der Oxidation bei stark oberflächenaktiven Additiven, wie z. B. Fettalkoholen, kann reiner Sauerstoff beigemischt werden (bis ca. 70 Vol.%). Gegebenenfalls kann auch mit Sauerstoff angereicherte Luft oder weitgehend reiner Sauerstoff in den Elektrolyten eingeleitet werden.
Wenn mit hochentzündlichen Elektrolyten gearbeitet wird, kann es aus Gründen der Betriebssicherheit gegebenenfalls empfehlenswert sein, die Luft mit Stickstoff so weit anzureichern, daß der für eine Zündung des Gasgemisches erforderliche Sauerstoffpartialdruck unterschritten wird.
Weitere geeignete, jedoch weniger bevorzugte Oxidationsmittel sind Wasserstoffperoxid, organische oder anorganische Peroxoverbindungen oder Oxoanionen der Halogene Chlor, Brom oder Iod, bei denen das Halogen eine Oxidationsstufe zwischen +1 und +5 aufweist. Bei der Verwendung stärkerer Oxidationsmittel als Luftsauerstoff ist jedoch darauf zu achten, daß keine Peroxidbildung mit dem Elektrolyten eintritt.

Die elektrische Gleichspannung zwischen Kathode und Anode stellt man vorzugsweise so ein, daß eine Stromdichte von 0,05 bis 10 mA/cm², bezogen auf die Anodenfläche, vorzugsweise im Bereich von 1 bis 5 mA/cm², erreicht wird. Bei einem ausreichend leitfähigen Elektrolyten läßt sich dies dadurch erreichen, daß man zwischen Kathode und Anode eine elektrische Gleichspannung im Bereich von etwa 1 bis etwa 100 Volt anlegt.

Während der Durchführung des erfindungsgemäßen Verfahrens hält man den Elektrolyten vorzugsweise in möglichst starker Bewegung. Dies kann beispielsweise dadurch geschehen, daß man den Elektrolyten rührt. Zusätzlich oder alternativ hierzu kann man den Elektrolyten mit Ultraschall behandeln. Des weiteren besteht die Möglichkeit, insbesondere bei der Verwendung von Luftsauerstoff als Oxidationsmittel, den einzuleitenden Gasstrom als feinverteilte Glasblasen zur Konvektion des Elektrolyten zu nutzen. Die Elektrolytbewegung und/oder das Behandeln mit Ultraschall haben den Vorteil, daß die gebildeten Metalloxide nicht an der Kathode haften bleiben, d.h. diese nicht mit einer isolierenden Schicht überziehen.

Die Ionen des Metalls oder der Metalle, deren Oxide bzw. Mischoxide man herstellen will, können auf unterschiedliche Weise in den Elektrolyten gelangen.

Gemäß einer bevorzugten Ausführungsform des erfindungsgemäßen Verfahrens kann man so verfahren, daß man eine inerte Anode verwendet und man ein Salz desjenigen oder Salze derjenigen Metalle in dem Elektrolyten auflöst, dessen Oxid oder deren Mischoxid hergestellt werden soll. Hierbei werden insbesondere Metallsalze ausgewählt, die in dem verwendeten Elektrolyten eine ausreichende Löslichkeit haben. Als Metallsalze können im allgemeinen Halogenide (vorzugsweise Fluoride, Chloride, Bromide und lodide), Nitrate, Acetate, Sulfonate, Carboxylate und Hexafluorphosphate der Metalle und deren Gemische eingesetzt werden. Bei Verwendung beispielsweise von Tetrahydrofuran als Elektrolyt sind z. B. in der Regel Chloride oder Nitrate der jeweiligen Metalle geeignet. Nach dieser Ausführungsform können bei der Verwendung von Metallsalzgemischen auch Mischoxide hergestellt werden.
Als Kathodenmaterial und gegebenenfalls Anodenmaterial wählt man bei dieser Ausführungsform vorzugsweise ein Material, das unter den gewählten Elektrolysebedingungen inert ist. Aufgrund der aggressiven Bedingungen im Anodenraum werden als Anodenmaterial im allgemeinen chemisch beständige Anodenmaterialien verwendet. Geeignet sind beispielsweise Elektroden aus Platin oder sonstigen Platinmetallen, Gold, Niob, Tantal, Wolfram, Graphit oder Glaskohlenstoff. Diese eignen sich gleichermaßen als Kathoden- wie auch als Anodenmaterial.

Eine weitere, besondere Ausführungsform für die Herstellung von Mischoxiden ist ein "Hybridverfahren" zwischen dem mit einer Opferanode arbeitenden Verfahren gemäß DE 198 408 42 A1 und der zuvor beschriebenen "Salzroute". Diese Ausführungsform kann insbesondere eingesetzt werden, wenn bei der Herstellung von Mischoxiden für eine entsprechende Metallsalzkomponente Löslichkeitsprobleme bestehen. Weiterhin könnten auf diese Weise Dotierungen in abgeschiedene Produkte eingebracht werden.
Bei dieser speziellen Ausführungsform kann man beispielsweise so verfahren, daß man - im Falle der Herstellung von Mischoxiden mindestens zweier Metalle - die in dem Elektrolyten gelösten Metallionen dadurch erzeugt, daß man ein Salz des einen Metalles in dem Elektrolyten in Lösung bringt und eine Anode (Opferanode), die das andere Metall enthält, verwendet. Beispielsweise kann man eine Anode verwenden, die dasjenige Metall, dessen Oxid hergestellt werden soll, enthält oder hieraus besteht und die sich während der Herstellung der Oxide anodisch auflöst. Gleichermaßen kann man eine Anode aus einem inerten Material verwenden, die zuvor mit demjenigen Metall überzogen worden ist, dessen Oxid man herstellen will; in letzterem Falle löst sich während der elektrochemischen Herstellung des Metalloxids das entsprechende Metall anodisch von der Anode ab.

Je nach Metall und Elektrolysebedingungen fallen die Oxide bzw. die Mischoxide in röntgenamorpher oder in kristalliner Form an. Sie zeigen also entweder ein Röntgenbeugungsdiagramm, das dem einer Flüssigkeit ähnelt und nur wenige breite Maxima aufweist (röntgenamorph) oder das aus einzelnen deutlich abgesetzten Röntgenreflexen besteht (röntgenkristallin). Die erhaltenen röntgenamorphen oder röntgenkristallinen Metalloxide trennt man von dem Elektrolyten ab, was kontinuierlich oder chargenweise erfolgen kann. Das Abtrennen kann beispielsweise durch kontinuierliches oder diskontinuierliches Filtrieren oder Zentrifugieren erfolgen. Erforderlichenfalls wäscht man die abgetrennten Metalloxide, vorzugsweise mit dem als Elektrolyt verwendeten organischen Lösungsmittel, gegebenenfalls bei erhöhten Temperaturen, um eventuell vorhandene Salzreste und Stabilisatorreste zu entfemen. Anschließend werden die Metalloxide getrocknet, beispielsweise bei einer Temperatur im Bereich von 100 °C.

Wünscht man kristalline Metalloxide oder -mischoxide herzustellen und fallen diese nicht gleich bei der Elektrolyse in der erwünschten Form an, kann man die vom Elektrolyten abgetrennten Metall(misch)oxide thermisch nachbehandeln. Beispielsweise können sie dadurch in eine röntgenkristalline Form überführt werden, daß man sie bei einer Temperatur im Bereich zwischen etwa 300 und etwa 1200 °C und insbesondere zwischen etwa 400 und etwa 1000 °C calciniert. Die Zeitdauer für die Calcinierung hängt von der Umwandlungsgeschwindigkeit der amorphen in die kristallinen (Misch-) Oxide ab und kann beispielsweise im Bereich zwischen etwa 5 Minuten und etwa 4 Stunden liegen. Je nach ausgewähltem Metall(misch)oxid kann es dabei vorkommen, daß die Größe der Kristalle mit zunehmender Calcinierungsdauer wächst. Alternativ können die amorphen Proben einer hydrothermalen Behandlung unterworfen werden. Hierbei werden die Proben mit einem Lösungsmittel, vorzugsweise mit Wasser, versetzt und für einige Stunden im verschlossenen Behälter unter autogenem Druck bei einer Temperatur zwischen 100 und 250 °C behandelt. Durch diese Vorgehensweise werden die den Partikeln anhaftenden organischen Bestandteile entfernt. Gleichzeitig wird das Wachstum der nanoskaligen Primärteilchen stark eingeschränkt, vorzugsweise vermieden.

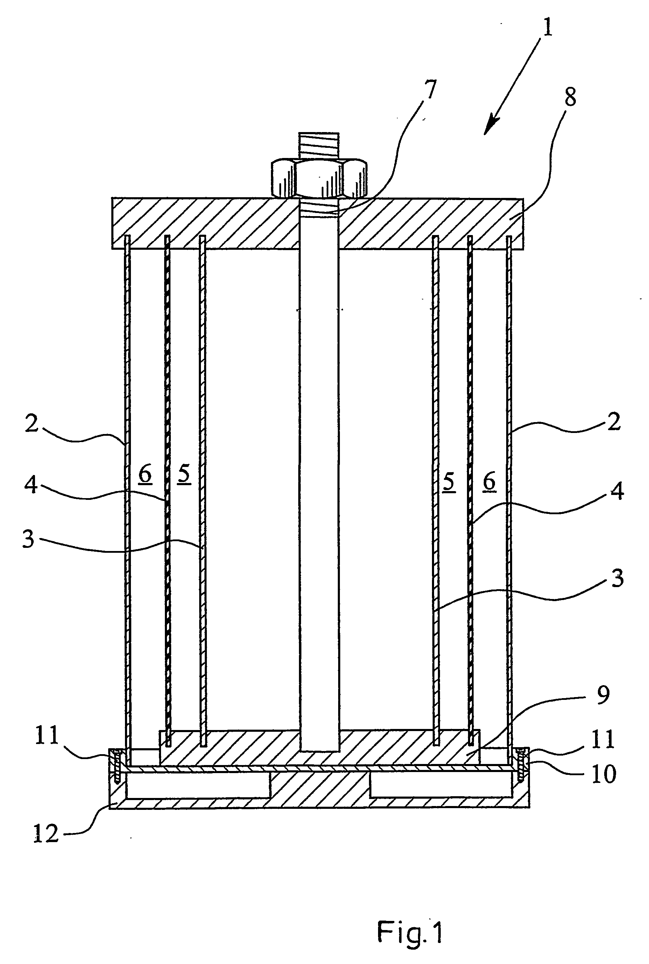

Die Figuren 1 und 2 zeigen jeweils einen Schnitt durch eine Vorrichtung 1, die zur Durchführung des erfindungsgemäßen Verfahrens geeignet ist. Gemäß dieser besonderen Ausführungsform ist entsprechend Fig. 1 die Elektrolysevorrichtung 1 als ein System konzentrischer Röhren ausgebildet. Dabei ist die äußere Röhre 2, die beispielsweise aus einem 0,5 mm dicken Edelstahlblech besteht, vorzugsweise als Kathode ausgebildet. Die mittlere Röhre 4 wird von einer kationenleitenden Membran, z.B. einer Nafion^{®}-Membran, gebildet. Die äußere Röhre 2 und die mittlere Röhre 4 mit der Membran begrenzen den Raum der Kathodenhalbzelle 6. Die Gegenelektrode 3, z.B. eine Elektrode aus Platin, Titan oder Graphit, die vorzugsweise als Anode verwendet wird, stellt die innere der konzentrischen Röhren da. Die innere Röhre 3 (Anode) und die Membranschicht 4 begrenzen den Raum der Anodenhalbzelle 5. Die einzelnen Röhren 2 (Kathode), 4 (Membran), 3 (Anode) sind durch gegenüberliegende Halterungen 8, 9 und 10 verspannt, wobei die gegenüberliegenden Haltungen durch eine Befestigungsvorrichtung 7, vorzugsweise in Form einer Schraube, zum Beispiel aus inertem Material wie geeigneten Kunststoffen, zusammengehalten werden. Die zuvor beschriebene Vorrichtung zur Durchführung des erfindungsgemäßen Verfahrens kann an eine geeignete Strom- und Spannungsquelle angeschlossen werden. Die Fig. 1 stellt eine besondere Ausführungsform einer Vorrichtung zur Durchführung des erfindungsgemäßen Verfahrens dar. Selbstverständlich ist das erfindungsgemäße Verfahren nicht hierauf beschränkt. Dem Fachmann sind zahlreiche Abwandlungsmöglichkeiten und Varianten geläufig, wie er Anodenhalbzelle und Kathodenhalbzelle durch ein Diaphragma voneinander trennen kann, ohne daß er dabei den Rahmen der vorliegenden Erfindung verläßt (siehe beispielsweise Fig. 2).

Das erfindungsgemäße Verfahren weist gegenüber dem Stand der Technik eine Reihe von Vorteilen auf:

Das erfindungsgemäße Verfahren ermöglicht die relativ einfach zu handhabende Herstellung von nanoskaligen, amorphen und kristallinen Metalloxiden und - mischoxiden aus Metallsalzlösungen. Im Unterschied zum Verfahren gemäß DE 198 408 42 A1 müssen die benötigten Metallionen nicht während des Prozesses in situ aus Metallblechen gewonnen werden, sondern können direkt dem Ausgangselektrolyten als Metallsalz zugesetzt werden. Bei der Verwendung von Halogenidsalzen (Metallsalze und/oder Leitsalze) tritt nicht das Problem der Halogenabscheidung auf, welche die entstandenen Metallcluster direkt nach ihrer Bildung wieder auflöst. Folglich können ohne weiteres Metallsalzhalogenide und die Halogenverbindungen der Stabilisatoren (z. B. Dehyquart^{®} A), die oftmals einen sehr niedrigen Preis besitzen und meist eine außergewöhnlich gute Löslichkeit in organischen Medien aufweisen, zum Einsatz kommen. Des weiteren kann eine Verunreinigung der erzeugten Metall(misch)oxide durch die Einlagerung von anionischen Bestandteilen, die aus den Metall- und/oder Leitsalzen stammen, vermieden werden, weil diese im Anodenraum verbleiben.

Weitere Ausgestaltungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der folgenden Ausführungsbeispiele veranschaulicht, welche die Erfindung jedoch keinesfalls beschränken.

### AUSFÜHRUNGSBEISPIELE:

In den folgenden Ausführungsbeispielen wurden Lösungen verschiedener Metallsalze bzw. deren Gemische unter den jeweils angegebenen, erfindungsgemäßen Verfahrensbedingungen elektrolysiert. Als Versuchsapparatur wurde eine Apparatur gemäß Fig. 2 verwendet. Die Ergebnisse sind im einzelnen wie folgt:

### Beispiel 1:

| | |
|---|---|
| Elektrolyt Kathodenraum: | Isopropanol, Tetrabutylammoniumbromid (TBAB) (0,1 M), 1 g ZnCl₂ |
| Elektrolyt Anodenraum: | Isopropanol, TBAB (0,1 M) |
| Elektroden: | 2 x Pt |
| Stromdichte: | 3 mA/cm² |
| Diaphragma-Material: | poröse Glasfritte |
| Produkt: | **ZnO**, kristallin |

### Beispiel 2:

| | |
|---|---|
| Elektrolyt Kathodenraum: | Isopropanol, TBAB (0,1 M), 2 g MnCl₂ |
| Elektrolyt Anodenraum: | Isopropanol, TBAB (0,1 M), |
| Elektroden: | 2 x Pt |
| Stromdichte: | 3 mA/cm² |
| Diaphragma-Material: | poröse Glasfritte |
| Produkt: | γ-**Mn₃O₄** (tetragonal), kristallin |

### Beispiel 3:

| | |
|---|---|
| Elektrolyt Kathodenraum: | 200 ml n-Propanol, TBAB (0,1 M), 2,0 g NiCl₂ x 6H₂O |
| Elektrolyt Anodenraum: | 200 ml n-Propanol, TBAB (0,1 M) |
| Elektroden: | 2 x Pt |
| Stromdichte: | 3 mA/cm² |
| Diaphragma-Material: | poröse Glasfritte |
| Produkt: | röntgenamorph, hellgrün |
| Calcinierung (45 Minuten | |
| bei 300 °C): | **NiO**, schwarz |

### Beispiel 4:

| | |
|---|---|
| Elektrolyt Kathodenraum: | 200 ml n-Propanol, TBAB (0,1 M), 1,5 g FeCl₂ |
| Elektrolyt Anodenraum: | 200 ml n-Propanol, TBAB (0,1 M) |
| Elektroden: | 2 x Pt |
| Stromdichte: | 3 mA/cm² |
| Diaphragma-Material: | poröse Glasfritte |
| Produkt: | röntgenamorph |
| Calcinierung (15 Minuten bei 500 °C): | α-**Fe₂O₃ + γ-Fe₂O₃** |

### Beispiel 5:

| | |
|---|---|
| Elektrolyt Kathodenraum: | 200 ml n-Propanol, TBAB (0,1 M), 1,5 g CoCl₂ x 6H₂O |
| Elektrolyt Anodenraum: | 200 ml n-Propanol, TBAB (0,1 M) |
| Elektroden: | 2 x Pt |
| Stromdichte: | 3 mA/cm² |
| Diaphragma-Material: | poröse Glasfritte |
| Produkt: | röntgenamorph |
| Calcinierung (30 Minuten bei 500 °C): | **Co₃O₄** |

### Beispiel 6:

| | |
|---|---|
| Elektrolyt Kathodenraum: | 200 ml n-Propanol, Cetylmethylammoniumchlorid (Dehyquart A) (0,1 M), 1,5 g FeCl₃, 0,6 g CoCl₂x6H₂O (Co : Fe = 1 : 2) |
| Elektrolyt Anodenraum: | 200 ml n-Propanol, Dehyquart A (0,1 M) |
| Elektroden: | 2 x Pt |
| Stromdichte: | 3 mA/cm² |
| Diaphragma-Material: | poröse Glasfritte |
| Produkt: | röntgenamorph |
| Calcinierung (30 Minuten | |
| bei 500 °C): | **CoFe₂O₄** |

### Beispiel 7:

| | |
|---|---|
| Elektrolyt Kathodenraum: | 200 ml n-Propanol, TBAB (0,1 M), SnCl₂ (0,015 M) |
| Elektrolyt Anodenraum: | 200 ml n-Propanol, TBAB (0,1 M) |
| Elektroden: | In-Anode, Edelstahl-Kathode |
| Stromdichte: | 3 mA/cm² |
| Diaphragma-Material: | poröse Glasfritte |
| Produkt: | röntgenamorph |
| Calcinierung (30 Minuten bei 700 °C): | **In₂O₃ + SnO₂** |

### Beispiel 8:

| | |
|---|---|
| Elektrolyt Kathodenraum: | n-Propanol, TBAB (0,1 M); ZnCl₂ (0,05 M) |
| Elektrolyt Anodenraum: | n-Propanol, TBAB (0,1 M) |
| Kathode: | Edelstahl |
| Anode: | Graphit |
| Stromdichte: | 1 mA/cm² |
| Diaphragma-Material: | Vyon^{®} F |
| Produkt: | weißes, kristallines **ZnO** |

### Beispiel 9:

| | |
|---|---|
| Elektrolyt Kathodenraum: | Isopropanol, TBAB (0,1 M); MnCl₂ (0,05 M) |
| Elektrolyt Anodenraum: | Isopropanol, TBAB (0,1 M) |
| Elektroden: | 2 x Pt |
| Stromdichte: | 3 mA/cm² |
| Diaphragma-Material: | Teflon^{®} |
| Produkt: | kristallin, γ-**Mn₃O₄** (tetragonal) |

### Beispiel 10:

| | |
|---|---|
| Elektrolyt Kathodenraum: | 1-Propanol, Dehyquart A (0,05 M), 6,8 g ZnCl₂ (0,1 M), CaCl₂ (0,1 M) |
| Elektrolyt Anodenraum: | 1-Propanol, Dehyquart A (0,05 M), CaCl₂ (0,1 M) |
| Elektroden: | Graphit-Anode, platinierte Ti-Kathode |
| Stromdichte: | 3 mA/cm² |
| Diaphragma-Material: | Nafion^{®} |
| Produkt: | kristallines **ZnO** |

### Beispiel 11:

| | |
|---|---|
| Elektrolyt Kathodenraum: | 1-Propanol, Dehyquart A (0,1 M), FeCl₃ (wasserfrei) (0,05 M) |
| Elektrolyt Anodenraum: | 1-Propanol, Dehyquart A (0,1 M) |
| Elektroden: | Graphit-Anode, Edelstahl-Kathode |
| Stromdichte: | 0,5 MA/cm² |
| Diaphragma-Material: | Nafion^{®} |
| Produkt: | amorph |
| Calcinierung (30 min bei 500 °C): | kristallin: α-**Fe₂O₃ + γ-Fe₂O₃** |

### Beispiel 12:

| | |
|---|---|
| Elektrolyt Kathodenraum: | 1-Propanol, TBAB (0,1 M), CoCl₂ x 6 H₂O (0,025 M) |
| Elektrolyt Anodenraum: | 1-Propanol, TBAB (0,1 M) |
| Elektroden: | Graphit-Anode, Edelstahl-Kathode |
| Stromdichte: | 0,5 mA/cm² |
| Diaphragma-Material: | Nafion^{®} |
| Produkt: | amorph |
| Calcinierung (30 min bei 500 °C): | kristallin: **Co₃O₄** |

## Patentansprüche

1. Verfahren zur Herstellung amorpher und/oder kristalliner (Misch-)Oxide von Metallen der dritten bis fünften Hauptgruppe oder der Nebengruppen des Periodensystems, mit mittleren Teilchendurchmessern der (Misch-)Oxide im Bereich von 1 bis 500 nm, insbesondere 1 bis 100 nm, wobei man in einer mit einer Kathode und einer Anode ausgestatteten Elektrolysevorrichtung in einem organischen Elektrolyten gelöste Ionen desjenigen oder derjenigen Metalle, deren (Misch-)Oxid hergestellt werden soll, in Gegenwart eines Oxidationsmittels an der Kathode elektrochemisch reduziert, **dadurch gekennzeichnet, daß** Kathodenraum (Kathodenhalbzelle) und Anodenraum (Anodenhalbzelle) durch eine poröse Trenn- oder Scheidewand (Diaphragma) voneinander getrennt sind, die den Stromdurchgang ermöglicht, jedoch den Durchtritt von elementarem Halogen vom Anodenzum Kathodenraum verhindert.

2. Verfahren nach Anspruch 1, **dadurch gekennzeichnet, daß** die poröse Trenn- oder Scheidewand insbesondere ein Halogenrückhaltevermögen aufweist.

3. Verfahren nach Anspruch 1 oder 2, **dadurch gekennzeichnet, daß** die poröse Trenn- oder Scheidewand eine poröse Glasfritte, insbesondere mit einem Porendurchmesser von etwa 1 bis 4 µm, ist.

4. Verfahren nach Anspruch 1 oder 2, **dadurch gekennzeichnet, daß** die poröse Trenn- oder Scheidewand ein Polytetrafluorethylenfilter oder eine Polytetrafluorethylenmembran oder aber eine poröse Polyethylenfolie oder Polyethylenscheibe, insbesondere mit einem Porendurchmesser von etwa 1 bis 4 µm, ist.

5. Verfahren nach Anspruch 1 oder 2, **dadurch gekennzeichnet, daß** die poröse Trenn- oder Scheidewand eine protonenleitende Membran, vorzugsweise mit einem Porendurchmesser von etwa 1 bis 4 µm, ist.

6. Verfahren nach Anspruch 5, **dadurch gekennzeichnet, daß** die protonenleitende lonenaustauschermembran insbesondere eine perfluorierte lonenaustauschermembran, vorzugsweise mit einem Porendurchmesser von etwa 1 bis 4 µm, ist.

7. Verfahren nach einem der Ansprüche 1 bis 6, **dadurch gekennzeichnet, daß** der organische Elektrolyt eine Substanz ist, die im Temperaturbereich von etwa -78 °C bis etwa + 260 °C, insbesondere von etwa 0 °C bis etwa 60 °C, bei Normaldruck flüssig ist, und vorzugsweise ausgewählt wird aus der Gruppe von Ketonen, Alkoholen und Polyalkoholen, Ethern, Nitrilen und aromatischen Verbindungen.

8. Verfahren nach Anspruch 7, **dadurch gekennzeichnet, daß** der organische Elektrolyt ausgewählt wird aus der Gruppe von n-Propanol, i-Propanol, Glycerin und deren Mischungen mit Aceton, Tetrahydrofuran, Acetonitril und Toluol.

9. Verfahren nach einem der Ansprüche 1 bis 8, **dadurch gekennzeichnet, daß** der organische Elektrolyt zusätzlich einen Wassergehalt von etwa 0,01 bis etwa 2 Gew.-%, vorzugsweise etwa 0,05 bis etwa 1 Gew.-%, bezogen auf die Gesamtmenge des organischen Elektrolyten und des Wassers, aufweist.

10. Verfahren nach einem der Ansprüche 1 bis 9, **dadurch gekennzeichnet, daß** der organische Elektrolyt außerdem ein gelöstes Leitsalz enthält, wobei das Leitsalz insbesondere ausgewählt werden kann aus der Gruppe von in dem Elektrolyten löslichen Hexafluorophosphaten, Sulfonaten, Acetylacetonaten, Carboxylaten und quaternären Phosphonium- und/oder Ammoniumsalzen, insbesondere mit organischen Resten am Phosphor und/oder Stickstoff, insbesondere wobei das Leitsalz zusammen mit oberflächenaktiven Substanzen, welche die erzeugte Metalloxidpartikel stabilisieren und vorzugsweise aus der gesamten Substanzklasse der Tenside ausgewählt sind, ganz besonderes bevorzugt Fettalkohole, Fettalkoholethoxylate, Polyoxyethylencarbonsäure und/ oder Fettsäureethoxylate, eingesetzt wird.

11. Verfahren nach Anspruch 10, **dadurch gekennzeichnet, daß** als Leitsalz eine quaternäre Ammoniumverbindung eingesetzt wird, die gegebenenfalls ein oder mehrere Aryl- und/oder Alkylgruppen am Stickstoff tragen und die vorzugsweise als Halogenid vorliegen kann, wie Tetrabutylammoniumbromid.

12. Verfahren nach einem der Ansprüche 1 bis 11, **dadurch gekennzeichnet, daß** der organische Elektrolyt eine Temperatur im Bereich von 30 bis 120 °C aufweist.

13. Verfahren nach einem oder mehreren der Ansprüche 1 bis 12, **dadurch gekennzeichnet, daß** das Oxidationsmittel ausgewählt wird aus der Gruppe von Sauerstoff, Wasserstoffperoxid, Peroxoverbindungen und Oxoanionen der Halogene Chlor, Brom oder Iod, bei denen insbesondere das Halogen eine Oxidationsstufe zwischen +1 und +5 aufweist.

14. Verfahren nach Anspruch 13, **dadurch gekennzeichnet, daß** das Oxidationsmittel Luft(sauerstoff) ist, wobei das Oxidationsmittel dem Reaktionssystem vorzugsweise durch Einleiten von Luft in die Elektrolytlösung zugeführt wird.

15. Verfahren nach einem der Ansprüche 1 bis 14, **dadurch gekennzeichnet, daß** man die elektrische Gleichspannung zwischen Kathode und Anode vorzugsweise so einstellt, daß eine Stromdichte von 0,05 bis 10 mA/cm², bezogen auf die Anode, vorzugsweise im Bereich von 1 bis 5 mA/cm², erreicht wird.

16. Verfahren nach Anspruch 15, **dadurch gekennzeichnet, daß** man zwischen Kathode und Anode eine elektrische Gleichspannung im Bereich von 1 bis 100 Volt anlegt.

17. Verfahren nach einem der Ansprüche 1 bis 16, **dadurch gekennzeichnet, daß** man den Elektrolyten bewegt, insbesondere durch Rühren, Einleiten eines Gases und/oder Behandlung mit Ultraschall.

18. Verfahren nach einem der Ansprüche 1 bis 17, **dadurch gekennzeichnet, daß** man als Anoden- und/oder Kathodenmaterial ein Material verwendet, das unter den gewählten Elektrolysebedingungen inert ist und insbesondere ausgewählt wird aus der Gruppe von Platin und sonstigen Platinmetallen, Gold, Niob, Tantal, Wolfram, Graphit und Glaskohlenstoff.

19. Verfahren nach einem der Ansprüche 1 bis 18, **dadurch gekennzeichnet, daß** man die in dem Elektrolyten gelösten Metallionen dadurch erzeugt, daß man ein Salz desjenigen oder Salze derjenigen Metalle in dem Elektrolyten auflöst, dessen Oxid oder deren Mischoxid hergestellt werden soll.

20. Verfahren nach Anspruch 19, **dadurch gekennzeichnet, daß** als Metallsalz ein Halogenid, Nitrat, Acetat, Sulfonat, Carboxylat oder Hexafluorophosphat eingesetzt wird.

21. Verfahren nach einem der Ansprüche 1 bis 20, **dadurch gekennzeichnet, daß** man im Falle der Herstellung von Mischoxiden mindestens zweier Metalle die in dem Elektrolyten gelösten Metallionen dadurch erzeugt, daß man ein Salz des einen Metalles in dem Elektrolyten in Lösung bringt und eine Anode, die das andere Metall enthält, als Opferanode verwendet.

22. Verfahren nach einem der Ansprüche 1 bis 21, **dadurch gekennzeichnet, daß** man das entstandene Metall(misch)oxid vom Elektrolyten abtrennt und trocknet.

23. Verfahren nach Anspruch 22, **dadurch gekennzeichnet, daß** man das getrocknete Metall(misch)oxid anschließend calciniert, insbesondere bei einer Temperatur im Bereich von etwa 300 bis etwa 1200 °C, vorzugsweise von etwa 400 bis etwa 1000 °C, oder einer hydrothermalen Behandlung unterzieht.

24. Anwendung des Verfahrens nach einem der Ansprüche 1 bis 23 zur Herstellung amorpher und/oder kristalliner Oxide und Mischoxide von Metallen der dritten bis fünften Hauptgruppe oder der Nebengruppen des Periodensystems, insbesondere von Titanium, Zirkonium, Chrom, Molybdän, Eisen, Cobalt, Nickel, Indium, Zinn, Blei und/oder Aluminium.

## Claims

1. A process for the production of amorphous and/or crystalline (mixed) oxides of metals of the third to fifth main group or the secondary groups of the periodic system, with mean particle diameters of the (mixed) oxides in the range from 1 to 500 nm and more particularly 1 to 100 nm, ions dissolved in an organic electrolyte of that metal or those metals of which the (mixed) oxide is to be produced being electrochemically reduced at the cathode of an electrolysis cell equipped with a cathode and an anode in the presence of an oxidizing agent, **characterized in that** the cathode compartment (cathode half-cell) and the anode compartment (anode half cell) are separated from one another by a porous partition or separating wall (diaphragm) which allows current to pass through, but prevents the passage of elemental halogen from the anode to the cathode compartment.

2. A process as claimed in claim 1, **characterized in that** the porous partition or separating wall in particular has a high halogen retention capacity.

3. A process as claimed in claim 1 or 2, **characterized in that** the porous partition or separating wall is a porous glass frit, more particularly with a pore diameter of about 1 to 4 µm.

4. A process as claimed in claim 1 or 2, **characterized in that** the porous partition or separating wall is a polytetrafluoroethylene filter or a polytetrafluoroethylene membrane or a porous polyethylene film or polyethylene disk, more particularly with a pore diameter of about 1 to 4 µm.

5. A process as claimed in claim 1 or 2, **characterized in that** the porous partition or separating wall is a proton-conducting membrane, preferably with a pore diameter of about 1 to 4 µm.

6. A process as claimed in claim 5, **characterized in that** the proton-conducting ion exchanger membrane is in particular a perfluorinated ion exchanger membrane, preferably with a pore diameter of about 1 to 4 µm.

7. A process as claimed in any of claims 1 to 6, **characterized in that** the organic electrolyte used is a substance which is liquid at temperatures in the range from about -78°C to about +260°C and more particularly in the range from about 0°C to about 60°C at normal pressure and is preferably selected from the group consisting of ketones, alcohols and polyalcohols, ethers, nitriles and aromatic compounds.

8. A process as claimed in claim 7, **characterized in that** the organic electrolyte is selected from the group consisting of n-propanol, i-propanol, glycerol and mixtures thereof with acetone, tetrahydrofuran, acetonitrile and toluene.

9. A process as claimed in any of claims 1 to 8, **characterized in that** the organic electrolyte additionally contains in quantities of about 0.01 to about 2% by weight and preferably in quantities of about 0.05 to about 1 % by weight, based on the total quantity of the organic electrolyte and water.

10. A process as claimed in any of claims 1 to 9, **characterized in that** the organic electrolyte additionally contains a dissolved supporting electrolyte which may be selected in particular from the group consisting of electrolyte-soluble hexafluorophosphates, sulfonates, acetyl acetonates, carboxylates and quaternary phosphonium and/or ammonium salts, more particularly with organic groups at the phosphorus and/or nitrogen, the supporting electrolyte being used together with surfactants which stabilize the metal oxide particles produced and preferably being selected from the entire class of surfactants, the following compounds being most particularly preferred: fatty alcohols, fatty alcohol ethoxylates, polyoxyethylene carboxylic acids and/or fatty acid ethoxylates.

11. A process as claimed in claim 10, **characterized in that** the supporting electrolyte used is a quaternary ammonium compound which may optionally carry one or more aryl and/or alkyl groups at the nitrogen and which is preferably present as a halide, such as tetrabutyl ammonium bromide.

12. A process as claimed in any of claims 1 to 11, **characterized in that** the organic electrolyte has a temperature of 30 to 120°C.

13. A process as claimed in one or more of claims 1 to 12, **characterized in that** the oxidizing agent is selected from the group consisting of oxygen, hydrogen peroxide, peroxo compounds and oxo anions of the halogens chlorine, bromine or iodine where the halogen in particular has an oxidation number of +1 to +5.

14. A process as claimed in claim 13, **characterized in that** the oxidizing agent is air (atmospheric oxygen), the oxidizing agent preferably being supplied to the reaction system by introduction of air into the electrolyte solution.

15. A process as claimed in any of claims 1 to 14, **characterized in that** the electrical d.c. voltage between cathode and anode is preferably adjusted so that a current density of 0.05 to 10 mA/cm², based on the anode area, and preferably in the range from 1 to 5 mA/cm², is obtained.

16. A process as claimed in claim 15, **characterized in that** an electrical d.c. voltage of 1 to 100 volts is applied between cathode and anode.

17. A process as claimed in any of claims 1 to 16, **characterized in that** the electrolyte is agitated, more particularly by stirring, introduction of a gas and/or ultrasonication.

18. A process as claimed in any of claims 1 to 17, **characterized in that** the anode and/or cathode material is a material which is inert under the selected electrolysis conditions and which is selected in particular from the group consisting of platinum and other platinum metals, gold, niobium, tantalum, tungsten, graphite and glassy carbon.

19. A process as claimed in any of claims 1 to 18, **characterized in that** the metal ions dissolved in the electrolyte are produced by dissolving in the electrolyte a salt of the metal or salts of those metals whose oxide or mixed oxide is to be produced.

20. A process as claimed in claim 19, **characterized in that** a halide, nitrate, acetate, sulfonate, carboxylate or hexafluorophosphate is used as the metal salt.

21. A process as claimed in any of claims 1 to 20, **characterized in that**, in the production of mixed oxides of at least two metals, the metal ions dissolved in the electrolyte are produced by dissolving a salt of one metal in the electrolyte and using an anode containing the other metal as a sacrificial anode.

22. A process as claimed in any of claims 1 to 21, **characterized in that** the metal (mixed) oxide formed is separated from the electrolyte and dried.

23. A process as claimed in claim 22, **characterized in that** the dried metal (mixed) oxide is subsequently calcined, more particularly at a temperature in the range from about 300 to about 1200°C and preferably at a temperature in the range from about 400 to about 1,000°C, or subjected to a hydrothermal treatment.

24. The use of the process claimed in any of claims 1 to 23 for the production of amorphous and/or crystalline oxides and mixed oxides of metals of the third to fifth main group or the secondary groups of the periodic system, more particularly of titanium, zirconium, chromium, molybdenum, iron, cobalt, nickel, indium, tin, lead and/or aluminium.

## Revendications

1. Procédé pour la préparation d'oxydes (mixtes) amorphes et/ou cristallins de métaux du troisième groupe au cinquième groupe principal ou des sous-groupes du système périodique, les oxydes (mixtes) possédant des diamètres de particules moyens dans la plage de 1 à 500 nm, en particulier de 1 à 100 nm, dans lequel on réduit, dans un dispositif d'électrolyse équipé d'une cathode et d'une anode, par voie électrochimique, à la cathode, en présence d'un agent d'oxydation, des ions dissous dans un électrolyte organique, du métal ou des métaux dont il y a lieu de préparer un oxyde (mixte), **caractérisé en ce que** l'espace cathodique (la demi-cellule cathodique) et l'espace anodique (la demi-cellule anodique) sont séparés l'un de l'autre par une paroi ou une cloison poreuse de séparation (diaphragme) qui autorise la traversée du courant, mais qui empêche le passage de l'halogène élémentaire de l'espace anodique à l'espace cathodique.

2. Procédé selon la revendication 1, **caractérisé en ce que** la paroi ou la cloison poreuse de séparation présente en particulier une capacité de retenue des halogènes.

3. Procédé selon la revendication 1 ou 2, **caractérisé en ce que** la paroi ou la cloison poreuse de séparation est une fritte poreuse en verre, possédant en particulier un diamètre des pores d'environ 1 à 4 µm.

4. Procédé selon la revendication 1 ou 2, **caractérisé en ce que** la paroi ou la cloison poreuse de séparation est un filtre en polytétrafluoroéthylène ou une membrane en polytétrafluoroéthylène ou encore une feuille poreuse en polyéthylène ou un disque poreux en polyéthylène, possédant en particulier un diamètre des pores d'environ 1 à 4 µm.

5. Procédé selon la revendication 1 ou 2, **caractérisé en ce que** la paroi ou la cloison poreuse de séparation est une membrane conduisant les protons, possédant de préférence un diamètre des pores d'environ 1 à 4 µm.

6. Procédé selon la revendication 5, **caractérisé en ce que** la membrane échangeuse d'ions conduisant les protons représente en particulier une membrane perfluorée échangeuse d'ions, possédant de préférence un diamètre des pores d'environ 1 à 4 µm.

7. Procédé selon l'une quelconque des revendications 1 à 6, **caractérisé en ce que** l'électrolyte organique est une substance qui est liquide dans la plage de température d'environ -78 °C à environ + 260 °C, en particulier d'environ 0 °C à environ 60 °C, sous pression normale, et est de préférence choisi parmi le groupe comprenant des cétones, des alcools et des polyalcools, des éthers, des nitriles et des composés aromatiques.

8. Procédé selon la revendication 7, **caractérisé en ce que** l'électrolyte organique est choisi parmi le groupe comprenant le n-propanol, le i-propanol, le glycérol et leurs mélanges avec de l'acétone, du tétrahydrofuranne, de l'acétonitrile et du toluène.

9. Procédé selon l'une quelconque des revendications 1 à 8, **caractérisé en ce que** l'électrolyte organique présente en outre une teneur en eau d'environ 0,01 à environ 2 % en poids, de préférence d'environ 0,05 à environ 1 % en poids, rapportés à la quantité totale de l'électrolyte organique et de l'eau.

10. Procédé selon l'une quelconque des revendications 1 à 9, **caractérisé en ce que** l'électrolyte organique contient en outre un sel conducteur dissous, le sel conducteur pouvant être choisi en particulier parmi le groupe comprenant des hexafluorophosphates, des sulfonates, des acétylacétonates, des carboxylates et des sels de phosphonium et/ou d'ammonium quaternaires en particulier avec des radicaux organiques sur l'atome de phosphore et/ou sur l'atome d'azote, les sels mentionnés étant solubles dans l'électrolyte, en particulier dans lequel le sel conducteur est mis en oeuvre de manière conjointe avec des substances tensioactives qui stabilisent les particules d'oxydes métalliques obtenues et qui sont choisies de préférence parmi la classe totale en tant que telle des agents tensioactifs, de manière tout particulièrement préférée, des alcools gras, des éthoxylates d'alcools gras, de l'acide polyoxyéthylènecarboxylique et/ou des éthoxylates d'acides gras.

11. Procédé selon la revendication 10, **caractérisé en ce qu'**on met en oeuvre, à titre de sel conducteur, un composé d'ammonium quaternaire qui peut porter, le cas échéant, un ou plusieurs groupes aryle et/ou alkyle sur l'atome d'azote et qui peut être présent de préférence sous la forme d'un halogénure, tel que le bromure de tétrabutylammonium.

12. Procédé selon l'une quelconque des revendications 1 à 11, **caractérisé en ce que** l'électrolyte organique présente une température dans la plage de 30 à 120 °C.

13. Procédé selon une ou plusieurs des revendications 1 à 12, **caractérisé en ce que** l'agent d'oxydation est choisi parmi le groupe comprenant de l'oxygène, du peroxyde d'hydrogène, des composés peroxo et des oxoanions des halogènes chlore, brome ou iode, l'halogène présentant en particulier un degré d'oxydation entre +1 et +5.

14. Procédé selon la revendication 13, **caractérisé en ce que** l'agent d'oxydation est (l'oxygène de) l'air, l'agent d'oxydation étant acheminé au système de réaction de préférence en introduisant de l'air dans la solution d'électrolyte.

15. Procédé selon l'une quelconque des revendications 1 à 14, **caractérisé en ce qu'**on règle la tension électrique en courant continu entre la cathode et l'anode de préférence de telle sorte que l'on atteint une densité de courant de 0,05 à 10 mA/cm², rapportée à l'anode, de préférence dans la plage de 1 à 5 mA/cm².

16. Procédé selon la revendication 15, **caractérisé en ce qu'**on applique entre la cathode et l'anode, une tension électrique en courant continu dans la plage de 1 à 100 volts.

17. Procédé selon l'une quelconque des revendications 1 à 16, **caractérisé en ce qu'**on remue l'électrolyte, en particulier par agitation, par introduction d'un gaz et/ou par traitement aux ultrasons.

18. Procédé selon l'une quelconque des revendications 1 à 17, **caractérisé en ce qu'**on utilise, à titre de matière d'anode et/ou de cathode, une matière qui est inerte dans les conditions d'électrolyse sélectionnées et qui est choisie en particulier parmi le groupe comprenant le platine et d'autres métaux du platine, l'or, le niobium, le tantale, le tungstène, le graphite et le carbone vitreux.

19. Procédé selon l'une quelconque des revendications 1 à 18, **caractérisé en ce que** l'on obtient les ions métalliques dissous dans l'électrolyte **en ce qu'**on dissout dans l'électrolyte un sel du métal ou des sels des métaux dont il s'agit de préparer l'oxyde ou l'oxyde mixte.

20. Procédé selon la revendication 19, **caractérisé en ce qu'**on met en oeuvre, à titre de sel métallique, un halogénure, un nitrate, un acétate, un sulfonate, un carboxylate ou un hexafluorophosphate.

21. Procédé selon l'une quelconque des revendications 1 à 20, **caractérisé en ce que**, dans le cas de la préparation d'oxydes mixtes d'au moins deux métaux, on obtient les ions métalliques dissous dans l'électrolyte de telle sorte que l'on solubilise un sel d'un métal dans l'électrolyte et on utilise une anode, qui contient l'autre métal, à titre d'anode sacrificielle.

22. Procédé selon l'une quelconque des revendications 1 à 21, **caractérisé en ce qu'**on sépare de l'électrolyte l'oxyde (mixte) de métal obtenu et on le sèche.

23. Procédé selon la revendication 22, **caractérisé en ce qu'**on soumet ensuite à une calcination l'oxyde (mixte) de métal séché, en particulier à une température dans la plage d'environ 300 à environ 1200 °C, de préférence d'environ 400 à environ 1000 °C, ou bien on le soumet à un traitement hydrothermique.

24. Utilisation du procédé selon l'une quelconque des revendications 1 à 23, pour la préparation d'oxydes et d'oxydes mixtes amorphes et/ou cristallins de métaux du troisième au cinquième groupe principal ou des sous-groupes du système périodique, en particulier du titane, de zirconium, du chrome, du molybdène, du fer, du cobalt, du nickel, de l'indium, de l'étain, du plomb et/ou de l'aluminium.
